# EUROPEAN PATENT SPECIFICATION

(11) **EP 2 703 204 B1**
(45) Date of publication and mention of the grant of the patent: **24.09.2014**
(21) Application number: 13194621.2
(22) Date of filing: 28.12.2007
(51) Int. Cl.: B60K 6/40, B60K 6/28, B60K 6/445, B60K 15/04, B60L 11/14, B60L 11/18, B60L 15/00

(54) **Hybrid vehicle and vehicle**
Hybridfahrzeug und Fahrzeug
Véhicule hybride et véhicule

(30) Priority: 04.01.2007 JP 2007000113
(43) Date of publication of application: 05.03.2014
(62) Divisional of application: 07860632.4
(73) Proprietor: Toyota Jidosha Kabushiki Kaisha, Toyota-shi, Aichi-ken 471-8571 (JP)
(72) Inventor: Fujitake, Yoshinori, Toyota-shi, Aichi 471-8571 (JP); Sawada, Hiroki, Toyota-shi, Aichi 471-8571 (JP); Mizutani, Atsushi, Toyota-shi, Aichi 471-8571 (JP)
(74) Representative: TBK

(56) References cited:
- EP-A1- 1 291 947
- DE-A1- 10 350 456
- JP-A- 2001 105 903
- CROSSE J: "BATTERY HOPES CHARGED", AUTOMOTIVE ENGINEER, PROFESSIONAL ENGINEERING PUBLISHING, LONDON, GB, vol. 24, no. 9, 1 October 1999 (1999-10-01), page 79, XP000852374, ISSN: 0307-6490

## Description

### Technical Field

The present invention relates to a vehicle, particularly to a vehicle. that can be externally supplied with an electric power.

### Background Art

There have been proposed various types of vehicles such as hybrid vehicles and electric vehicles that are developed in view of environment. The electric vehicle can drive wheels by an onboard battery. For example, Japanese Patent Laying-Open No. 1113318004 has proposed an electric vehicle that can automatically perform at least one of an opening operation and a closing operation for a charging unit.

The hybrid vehicle is equipped with a power storage device formed of a secondary battery or a capacitor, and generates a drive power from an electric power stored in the power storage device via a motor generator. Also, it generates a drive power by an engine.

For example, Japanese Patent Laying-Open No. 8-154307 has proposed a hybrid vehicle that is configured to suppress atmospheric pollution by guiding a driver to run the vehicle without relying on an internal combustion engine.

There is already proposed a hybrid vehicle in which an external power source such as a system power supply or a solar battery can charge an onboard power storage device.

For example, Japanese Patent Laying-Open No. 2005-204361 has proposed a hybrid vehicle that uses two dynamo-electric machines to supply externally an AC current for a commercial power.

Document JP 2001-105903 discloses a hybrid vehicle which is provided on an outer wall with a gasoline port communicating with a gasoline tank and a fuel supply port having a methanol port communicating with a methanol tank. The gasoline port and the methanol port are different in shape from each other and are not compatible. By this way, it is prevent that the ports are connected with undesired supply devices.

Document Crosse J: "BATTERY HOPES CHARGED" AUTOMOTIVE ENGINEER, PROFESSIONAL ENGINEERING PUBLISHING, LONDON, GB, vol. 24, no. 09 discloses an electric vehicle provided with a range extent and an auxiliary generator system to charge the batteries by using fuel. The batteries can be recharged using a common 230 V single-phase supply. The range extender is a twin cylinder engine using regular fuel to drive a generator recharging the battery pack.

Neither Japanese Patent Laying-Open No. 11-318004, 8-154307 nor 2005-204361 has described a positional relationship between a fuel supply port and a charging unit.

In connection with the positional relationship between fuel supply port and the charging unit, the charging unit and the fuel supply port are arranged on different side surfaces of the vehicle, respectively. When the vehicle having the charging unit and the fuel supply port in the above positions is electrically charged or fueled at a charging/fueling stand or station, the vehicle must be positioned such that the side surface provided with the charging unit is located on a charging device side and the fuel supply port is located on a fueling device side.

However, a driver is liable to confuse the side surfaces provided with the power supply unit and the fuel supply port, and must move the vehicle into the charging/fueling stand with attention given to a direction of the vehicle. This increases a load on the driver in a stage preceding the charging/fueling operation.

### Disclosure of the Invention

The present invention has been developed in view of the above matters, and an object of the invention is to suppress driver's confusion about positions of a charging/power-supplying unit (i.e., electric charging and electric power-supplying unit) and a fuel supply port, and thereby to reduce a load on a driver in a stage preceding charging/fueling operation the above object is achieved with the features of claim 1 and claim 5.

A hybrid vehicle which is not part of the invention includes a fuel tank for storing fuel; an internal combustion engine for generating a motive power, using the fuel supplied from the fuel tank; a fueling unit being connectable to a fuel-supply connection unit for supplying the fuel supplied from the fuel-supply connection unit to the fuel tank; an motor generator for supplying the motive power to a wheel; a power storage unit for storing an electric power to be supplied to the motor generator; and an electric power input/output unit being connectable to an electric connection unit for supplying, through the electric connection unit, the electric power to the power storage unit and/or externally supplying the electric power stored in the power storage unit. The electric power input/output unit and the fueling unit are arranged on the same side surface of the vehicle.

Preferably, the hybrid vehicle further includes an occupant accommodating compartment for accommodating an occupant; and an entry opening formed in the vehicle and communicating with the occupant accommodating compartment. The entry opening is positioned between the fueling unit and the electric power input/output unit.

Preferably, the fueling unit is located rearward, in a running direction of the vehicle, with respect to the entry opening, and the electric power input/output unit is arranged forward, in the running direction of the vehicle, with respect to the entry opening.

Preferably, the wheel includes a front wheel located forward, in the running direction of the vehicle, with respect to the entry opening and a rear wheel located rearward, in the running direction of the vehicle, with respect to the entry opening. The hybrid vehicle further includes a shaft connected to the front wheel for transmitting a motive power from the motor generator or the internal combustion engine to the rear wheel. The electric power input/output unit is located forward, in the running direction of the vehicle, with respect to the entry opening and rearward, in the running direction, with respect to the shaft.

Preferably, the wheel includes a front wheel arranged forward, in the running direction of the vehicle, with respect to the occupant opening and a rear wheel arranged rearward, in the running direction of the vehicle, with respect to the occupant opening. The electric power input/output unit is arranged in a position on the side surface of the vehicle higher than the front wheel.

Preferably, the hybrid vehicle further includes an occupant accommodating compartment for accommodating an occupant; and a driver seat arranged in the occupant accommodating compartment and allowing operation of the vehicle. The driver seat is located on the side surface side provided with the electric power input/output unit and the fueling unit with respect to a virtual center line of the vehicle extending in a running direction of the vehicle.

Preferably, the hybrid vehicle further includes an occupant accommodating compartment for accommodating an occupant; and a driver seat arranged in the occupant accommodating compartment and allowing operation of the vehicle. The driver seat is located on the side surface side opposite to the side surface provided with the electric power input/output unit and the fueling unit with respect to a virtual center line of the vehicle extending in a running direction of the vehicle.

Preferably, the motor generator includes a first motor generator having a first multi-phase winding and a first neutral point of the first multi-phase winding, and a second motor generator having a second multi-phase winding and a second neutral point of the second multi-phase winding. The electric power input/output unit includes a first interconnection connected to the first neutral point and a second interconnection connected to the second neutral point. The hybrid vehicle further includes a first inverter for supplying the electric power received from the power storage unit to the first motor generator, a second inverter for supplying the electric power received from the power storage unit to the second motor generator, and an inverter control unit controlling the first and second inverters. Further, the inverter control unit can control the first and second inverters to convert the AC power supplied from the electric power input/output unit to the first and second neutral points to the DC power, and to supply the DC power to the power storage unit, and/or can control the first and second inverters to convert the DC power supplied from the power storage unit to the first and second inverters to the AC power, and to supply the AC power to the electric power input/output unit.

Preferably, the motor generator includes a first motor generator having a first multi-phase winding and a first neutral point of the first multi-phase winding, and a second motor generator having a second multi-phase winding and a second neutral point of the second multi-phase winding. The electric power input/output unit includes a first interconnection connected to the first neutral point and a second interconnection connected to the second neutral point. The hybrid vehicle further includes a first inverter for supplying the electric power received from the power storage unit to the first motor generator, a second inverter for supplying the electric power received from the power storage unit to the second motor generator, and an inverter control unit controlling the first and second inverters. The inverter control unit controls the first and second inverters to convert the AC power externally provided via the electric power input/output unit to the first and second neutral points to the DC power, and to provide the DC power to the power storage unit.

### Brief Description of the Drawings

Fig. 1 is a perspective view showing a schematic structure of a hybrid vehicle according to an embodiment.
Fig. 2 is a block diagram showing the schematic structure in Fig. 1.
Fig. 3 is a perspective view showing a schematic structure of a body of a vehicle main-unit of the hybrid vehicle.
Fig. 4 is a side view of the hybrid vehicle.
Fig. 5 is a side view showing a first modification of the hybrid vehicle according to the embodiment.
Fig. 6 is a side view showing a second modification of the hybrid vehicle according to the embodiment.
Fig. 7 is a side view showing a third modification of the hybrid vehicle according to the embodiment.
Fig. 8 is a block diagram showing an example in which a charging/power-supplying unit and a fueling unit are arranged on a side surface on a driver seat side.
Fig. 9 is a side view showing a fourth modification of the hybrid vehicle according to the embodiment.
Fig. 10 is a side view showing a fifth modification of the hybrid vehicle according to the embodiment.
Fig. 11 is a side view showing a sixth modification of the hybrid vehicle according to the embodiment.
Fig. 12 is a schematic block diagram of the hybrid vehicle according to the embodiment of the invention, and illustrates external power supplying.
Fig. 13 is a schematic block diagram of the hybrid vehicle according to the embodiment of the invention, and illustrates charging of a battery.
Fig. 14 is a perspective view showing a part of a frame-equipped body.
Fig. 15 is a plan view showing a frame of the frame-equipped body shown in Fig. 14.
Fig. 16 is a schematic view schematically showing a structure in which the invention is applied to a fuel cell vehicle.
Fig. 17 is a perspective view showing structures of and around a connection unit.
Fig. 18 is a perspective view showing structures of and around the connection unit.

### Best Modes for Carrying Out the Invention

Embodiments of the invention will now be described with reference to the drawings. In the following description, the same or corresponding portions bear the same reference numbers, and description thereof is not repeated.

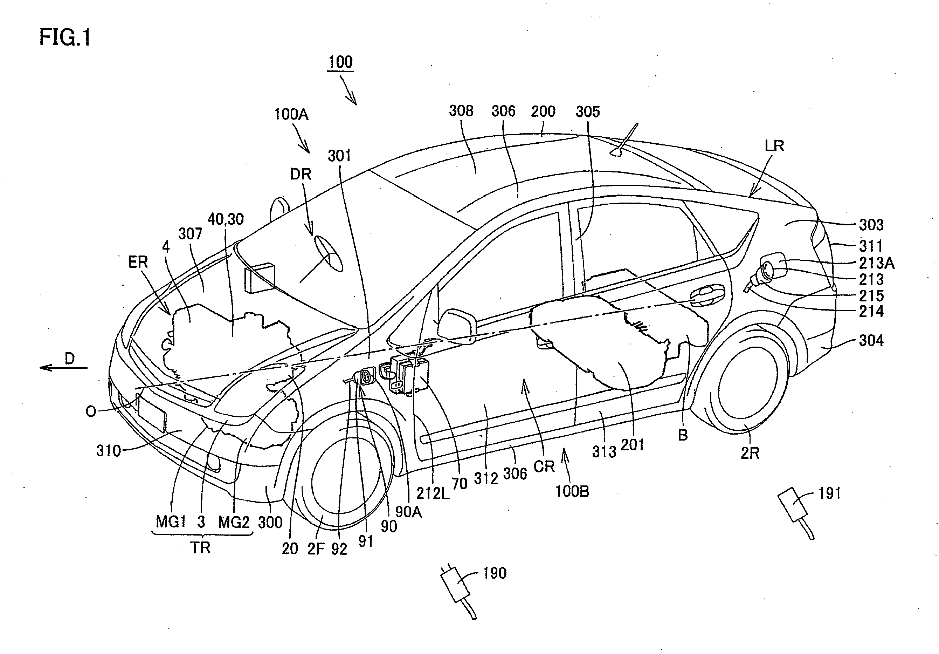

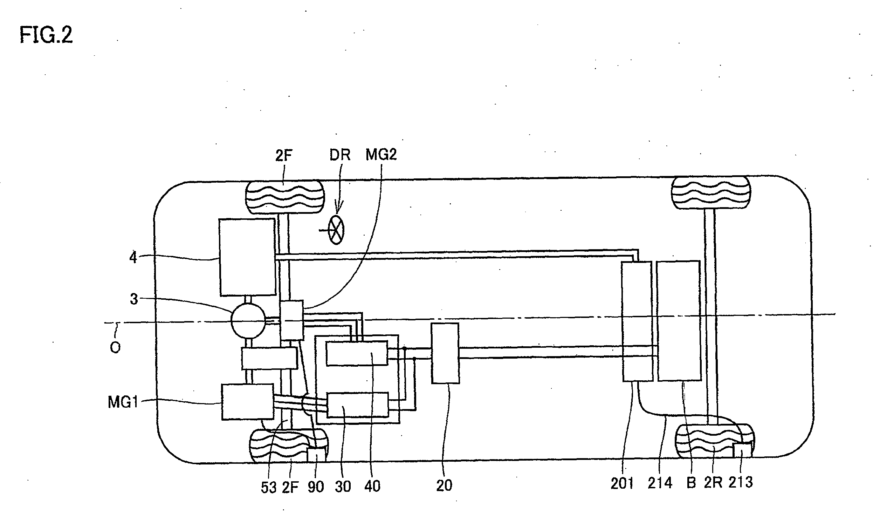

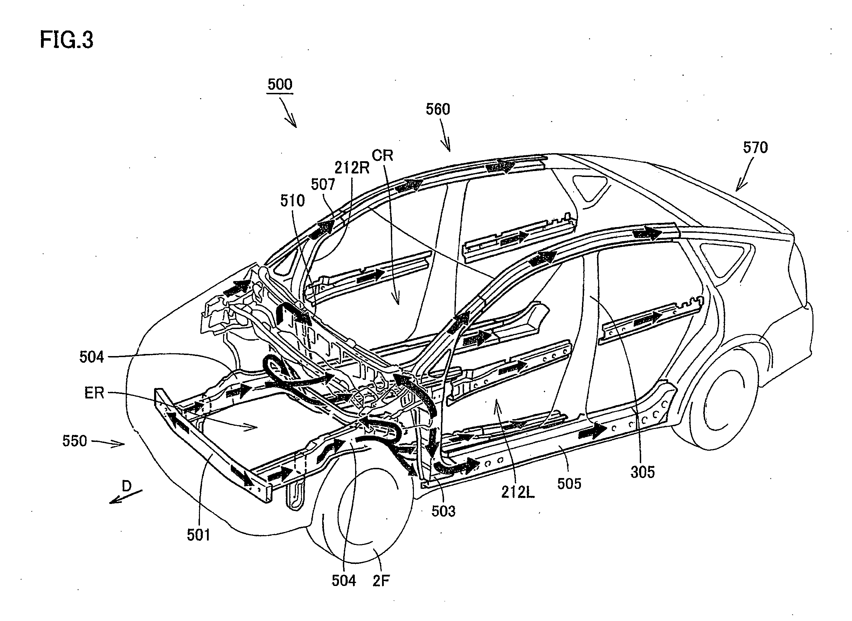

Referring to Figs. 1 to 13, description will be given on a hybrid vehicle 100 according to an embodiment. Fig. 1 is a perspective view showing a schematic structure of hybrid vehicle 100 according to the embodiment. Fig. 2 is a block diagram showing the schematic structure in Fig. 1. Fig. 3 is a perspective view showing a schematic structure of a body 500 of a vehicle main-unit 200 of hybrid vehicle 100.

Referring to Fig. 1, hybrid vehicle 100 includes vehicle main-unit 200 formed of a body and exterior parts, a pair of front wheels 2F arranged on a front side in a running direction D of hybrid vehicle 100, and rear wheels 2R arranged on a rear side in running direction D.

Vehicle main-unit 200 includes an engine compartment ER arranged at the front, in running direction D, of hybrid vehicle 100, an occupant accommodating compartment CR adjacent to a rear side, in running direction D, of engine compartment ER, and a luggage compartment LR adjacent to a rear side, in running direction D, of occupant accommodating compartment CR.

For example, as shown in Fig. 3, a unitized body is employed as body 500 of vehicle main-unit 200. Body 500 includes a front wall 550 that is arranged on the front side in running direction D and defines engine compartment ER, a compartment wall 560 defining occupant accommodating compartment CR, and a rear wall 570 arranged on a rear side, in running direction D, of vehicle main-unit 200.

Front wall 550 includes a front arm 501 that is arranged on the front side of vehicle main-unit 200 and extends in a width direction of vehicle main-unit 200, front side-walls 504 that continue to the opposite ends of front arm 501, respectively, and define side surface portions of engine compartment ER, and a front partition 510 arranged between engine compartment ER and occupant accommodating compartment CR.

Each front side-wall 504 has a vertical width that increases as the position moves from front arm 501 toward front partition 510. Front side-wall 504 has a lengthwise middle portion that is curved for accepting front wheel 2F.

Front side-wall 504 has a thickness that increases as the position moves from front arm 501 toward front partition 510.

Compartment wall 560 includes front supports 503 that are arranged on side portions located at widthwise opposite ends of front partition 510, respectively, and extend in a height direction of vehicle main-unit 200, front pillars 507 connected to upper ends of front supports 503, respectively, and under supports 505 connected to lower ends of front supports 503, respectively.

Body 500 is provided at its side surfaces with openings 212L and 212R that continue to occupant accommodating compartment CR for allowing entry of occupants. Each of openings 212L and 212R has a periphery that is defined by front support 503, under support 505, front pillar 507 and an edge of rear wall 570.

In body 500, a portion located forward, in running direction D, with respect to occupant accommodating compartment CR has a smaller thickness that a portion located rearward in running direction D. Thereby, when head-on collision occurs, a front side of body 500 deforms to absorb an impact for protecting the inside of occupant accommodating compartment CR.

A plurality of exterior parts are attached to the surface of body 500 having the above structure. Thereby, vehicle main-unit 200 is formed.

The exterior parts include, e.g., a front face 310 arranged on the front side of vehicle main-unit 200 in Fig. 1, a front bumper 300 arranged under front face 310, and front fenders 301 covering front side-walls 504 shown in Fig. 3 as well as front and rear doors 312 and 313 for closing openings 212L and 212R.

The exterior parts also include a hood 307 forming an upper lid of engine compartment ER, rear fenders 303 arranged rearward, in running direction D, with respect to rear doors 313, respectively, and a rear bumper 304 arranged under rear fenders 303.

In occupant accommodating compartment CR, there are arranged a driver seat DR for operating hybrid vehicle 100, a passenger seat neighboring, in the width direction of hybrid vehicle 100, to the driver seat, and rear seats behind the passenger seat and driver seat DR. In the example shown in Fig. 1, driver seat DR is offset toward right side surface (one of the side surfaces) 100A of hybrid vehicle 100 with respect to a center line O of hybrid vehicle 100 extending in running direction D.

As shown in Fig. 1, a fuel tank 201 storing liquid fuel such as gasoline is arranged under the rear seats in occupant accommodating compartment CR. A battery (power storage unit) B such as a fuel cell or a capacitor of a large capacity is arranged rearward, in running direction D, with respect to the rear seats.

Engine compartment ER accommodates an engine 4 of an internal combustion engine that generates a motive power driving front wheels 2F as well as a transaxle TR.

Transaxle TR includes motor generators MG1 and MG2 driving front wheels 2F, a booster converter 20 that boosting an electric power supplied from battery B, inverters 30 and 40 that convert the DC power supplied from booster converter 20 to an AC power and supply it to motor generators MG1 and MG2, respectively, and a power splitting mechanism 3 formed of a planetary gear and others.

Engine 4 is offset toward side surface 100A with respect to center line O, and transaxle TR is offset toward side surface 100B with respect to center line O. A center of gravity of a combination of engine 4 and transaxle TR is located on or near center line O to keep a widthwise balance of hybrid vehicle 100.

Further, a center of gravity of each of battery B and fuel tank 201 is located on or near center line O.

A charging/power-supplying unit (i.e., electric power input/output unit) 90 that is an unit for electric charging and electric power supplying as well as a fueling unit 213 are arranged on a side surface of hybrid vehicle 100, and particularly on side surface 100B opposite to side surface 100A adjacent to driver seat DR. A steering wheel, steering shaft, steering gear and the like for steering front wheels 2F are arranged in or near driver seat DR.

Charging/power-supplying unit 90 and fueling unit 213 keep a weight balance with respect to driver seat DR.

In the example shown in Fig. 1, charging/power-supplying unit 90 includes a connection unit 91 that is arranged on body 500 and has an opening for fitting a connector 190 thereinto, an openable lid 90A that can close an opening of connection unit 91 and an interconnection 92 connected to connection unit 91. Connector 190 includes a charging connector, an electric power supply connector or a charging/power-supplying connector.

The charging connector is a connector for charging battery B with an electric power supplied from a commercial power (e.g., of a single-phase AC 100V in Japan). This charging connector is, e.g., a socket connected to a general home power supply.

The power supply connector is a connector for supplying an electric power (e.g., of a single-phase AC 100V in Japan) supplied from hybrid vehicle 100 to an external load. Further, the charging/power-supplying connector is a connector having both functions as the charging connector and the power-supply connector described above, can charge the battery with the power supplied from the commercial power and can also supply the power from hybrid vehicle 100 to the external load.

A method of supplying and receiving the electric between connector 190 and charging/power-supplying unit 90 may be of a contact type in which a part of connector 190 can be in direct contact with at least a part of charging/power-supplying unit 90. Also, it may also be of an inductive type.

Interconnection 92 is connected to a neutral point between motor generators MG1 and MG2, and the power supplied from connector 190 can be supplied to battery B via motor generators MG1 and MG2, inverters 30 and 40, and booster converter 20.

Also, charging/power-supplying unit 90 can externally supply the power stored in battery B from connector 190 via booster converter 20 and inverters 30 and 40.

In the example shown in Fig. 1, fueling unit 213 includes a nozzle receiver 215 that is formed in body 500 and has an opening, a fueling pipe 214 connected to nozzle receiver 215 and fuel tank 201, and an openable lid 213A that is arranged on an exterior part for closing an opening of nozzle receiver 215.

Nozzle receiver 215 can receive a fueling nozzle of fueling connector 191 arranged outside hybrid vehicle 100. The supplied fuel such as gasoline flows through fueling pipe 214 into fuel tank 201.

Since fueling unit 213 and charging/power-supplying unit 90 are arranged on the same side surface 100B of hybrid vehicle 100 as described above, a driver can remember the positions of charging/power-supplying unit 90 and fueling unit 213 without difficulty. Therefore, when the driver moves hybrid vehicle 100 into charging/fueling stand or the like, an error about the entry and stop directions of hybrid vehicle 100 can be reduced.

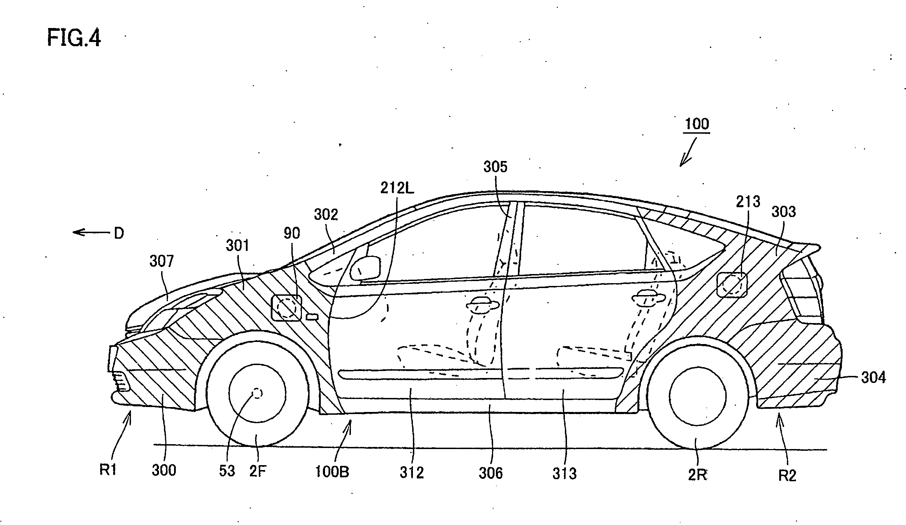

Fig. 4 is a side view of hybrid vehicle 100. In Fig. 4, charging/power-supplying unit 90 can be located in any position on side surface 100B of hybrid vehicle 100. For example, it may be located in any position on a side surface of rear bumper 304, rear fender 303, rear door 313, front door 312, front fender 301, a side surface of front bumper 300, a center pillar 305, a front pillar 302 or an under pillar 306. Likewise, fueling unit 213 can be located in any position on side surface 100B.

Charging/power-supplying unit 90 may be arranged in a region R1 of side surface 100B that is located forward in running direction D with respect to opening 212L, or in a region R2 thereof that is located rearward in running direction D with respect to opening 212L. Fueling unit 213 may be arranged in region R1 or R2 spaced from charging/power-supplying unit 90 with opening 212L therebetween.

Thereby, opening 212L is located between charging/power-supplying unit 90 and fueling unit 213 so that charging/power-supplying unit 90 and fueling unit 213 are spaced from each other in running direction D. Therefore, it is possible to suppress confusion about charging/power-supplying unit 90 and fueling unit 213 by the driver and the like.

Since charging/power-supplying unit 90 is spaced from fueling unit 213, a hole that is formed in body 500 for fitting connection unit 91 of charging/power-supplying unit 90 thereinto can be spaced from a hole into which nozzle receiver 215 of fueling unit 213 is fitted, and it is possible to suppress formation of a portion locally having a low rigidity in body 500.

In body 500, therefore, it is possible suppress formation of a portion that is liable to deteriorate over time. Region R1 includes side surfaces of front fender 301 and front bumper 300, and region R2 includes side surfaces of rear fender 303 and rear bumper 304.

Nozzle receiver 215 of fueling unit 213 receives the fueling nozzle of fueling connector 191 fitted thereinto, and supports fueling connector 191 through the fueling nozzle. Fueling connector 191 generally and internally has a regulating mechanism for regulating a fueling speed or rate, and is heavier than connector 190.

Fueling unit 213 supporting heavy fueling connector 191 as described above has greater rigidity than connection unit 91. In particular, fueling unit 213 supports fueling pipe 214, and therefore must have greater rigidity than connection unit 91 connected to interconnection 92.

Accordingly, connection unit 91 of smaller rigidity is located in region R1, and this structure can suppress excessive increase in rigidity of the front side of body 500 and can ensure an impact absorbing function of body 500. Thus, the thickness of body 500 located around charging/power-supplying unit 90 is smaller than the thickness of the portion of body 500 located around fueling unit 213.

Further, it has been generally and widely recognized that fueling unit 213 is arranged in side surface 100B and particularly at the rear of opening 212L. By arranging fueling unit 213 at the rear of opening 212L, therefore, it is possible to suppress the driver's erroneous recognition.

As shown in Fig. 1, fuel tank 201 is arranged under the rear seats, and fueling unit 213 is located in region R2 so that the length of fueling pipe 214 can be reduced.

Further, as shown in Fig. 1, motor generators MG1 and MG2 are arranged in engine compartment ER, and charging/power-supplying unit 90 is arranged in region R1 as shown in Fig. 4 so that the length of interconnection 92 can be reduced.

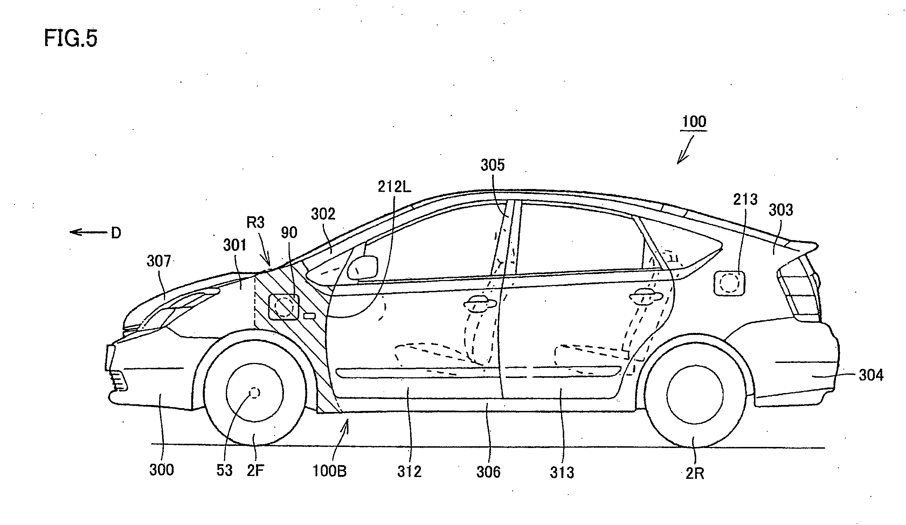

Preferably, as shown in Fig. 5, charging/power-supplying unit 90 is arranged in a region R3 that is located in side surface 100B and particularly is located rearward in running direction D with respect to a shaft 53 connected to front wheels 2F, and is located forward in running direction D with respect to the edge of opening 212L. In body 500 shown in Fig. 3, front side-wall 504 containing region R3 has the rigidity that increases as the position moves rearward in running direction D, and therefore has the rigidity that substantially allows appropriate supporting of connection unit 91 of charging/power-supplying unit 90. Accordingly, even when the charging and external power supplying operations are repeated, the secular deterioration of front side-wall 504 can be suppressed.

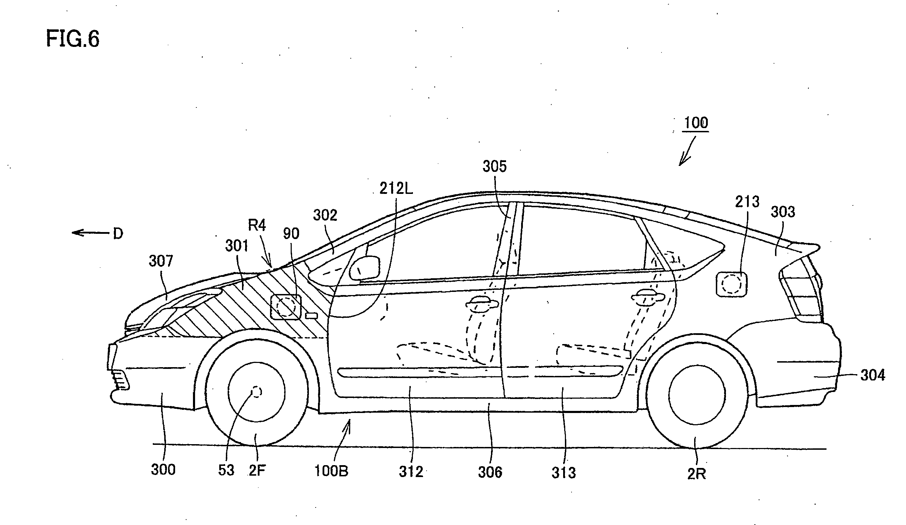

Preferably, as shown in Fig. 6, charging/power-supplying unit 90 is arranged in a region R4 that is located in side surface 100B and particularly between the opening edge of opening 212L and the forward edge (viewed in running direction D) of side surface 100B, and more particularly is located above an upper end of front wheel 2F.

Consequently, charging/power-supplying unit 90 can be located in a position allowing easy fitting of connector 190 shown in Fig. 1, and the charging and external power supplying operations can be performed efficiently.

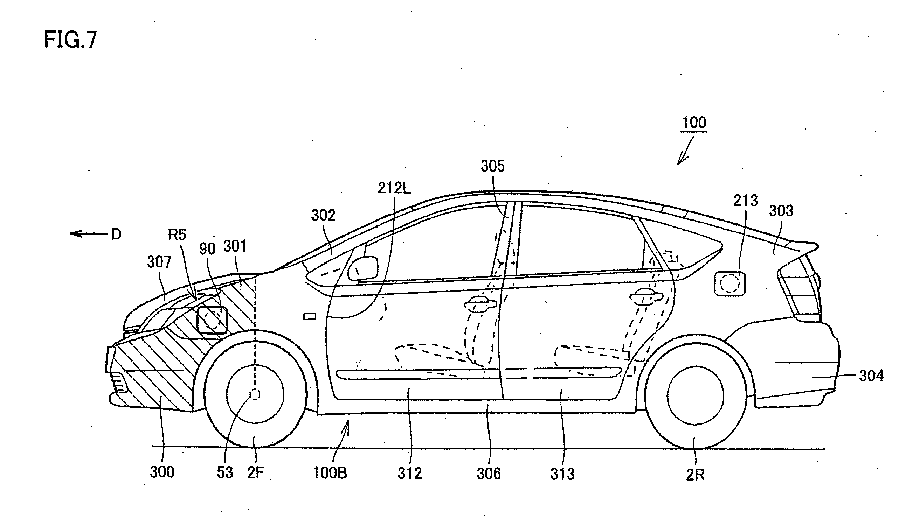

Preferably, as shown in Fig. 7, charging/power-supplying unit 90 is arranged in a region R5 that is located in side surface 100B and particularly is located forward in running direction D with respect to shaft 53. By arranging charging/power-supplying unit 90 in the above position, it is possible to suppress contact between the interconnection of connector 190 and opened front door 312 in the state where charging/power-supplying unit 90 is fitted into connector 190 shown in Fig. 1.

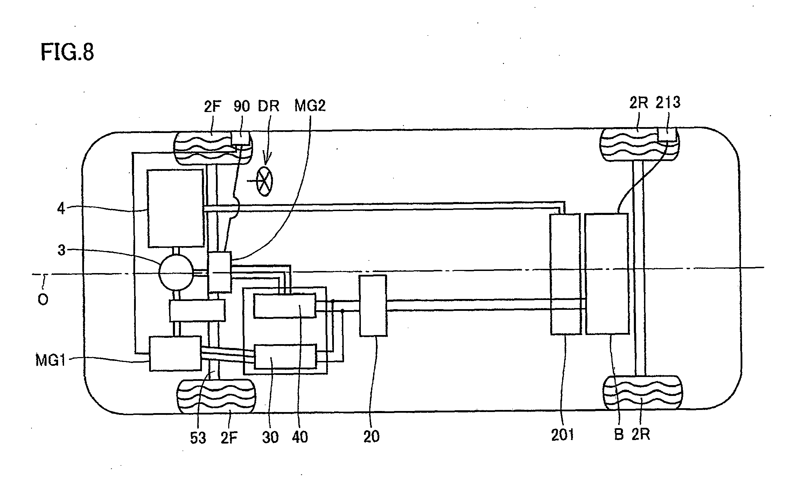

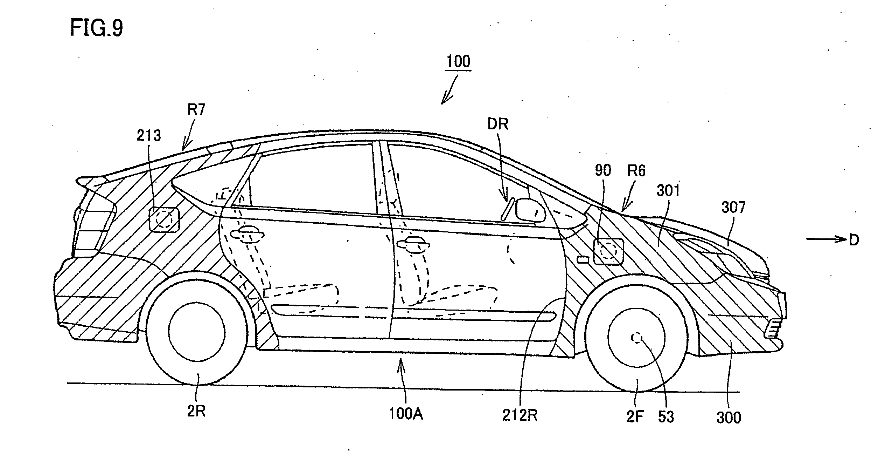

Fig. 8 is a block diagram showing an example in which charging/power-supplying unit 90 and fueling unit 213 are arranged in side surface 100A on the driver seat DR side. Fig. 9 is a side view showing an example in which charging/power-supplying unit 90 and fueling unit 213 are arranged in side surface 100A on the driver seat DR side.

A shown in Fig. 9, both charging/power-supplying unit 90 and fueling unit 213 are arranged in side surface 100A and are close to driver seat DR. Therefore, the driver who left driver seat DR for performing the charging/power-supplying operation can immediately start the operation.

Charging/power-supplying unit 90 and fueling unit 213 may be arranged in any position on side surface 100A.

In the example shown in Fig. 9, charging/power-supplying unit 90 is arranged in side surface 100A and particularly in a region R6 that is located forward, in running direction D, with respect to the opening edge of opening 212R on the driver seat DR side. Fueling unit 213 is arranged in side surface 100A and particularly in a region R7 that is located rearward, in running direction D, with respect to the opening edge of opening 212R.

As described above, opening 212R is located between charging/power-supplying unit 90 and fueling unit 213 so that confusion about charging/power-supplying unit 90 and fueling unit 213 can be suppressed, and body 500 can keep the impact absorbing function.

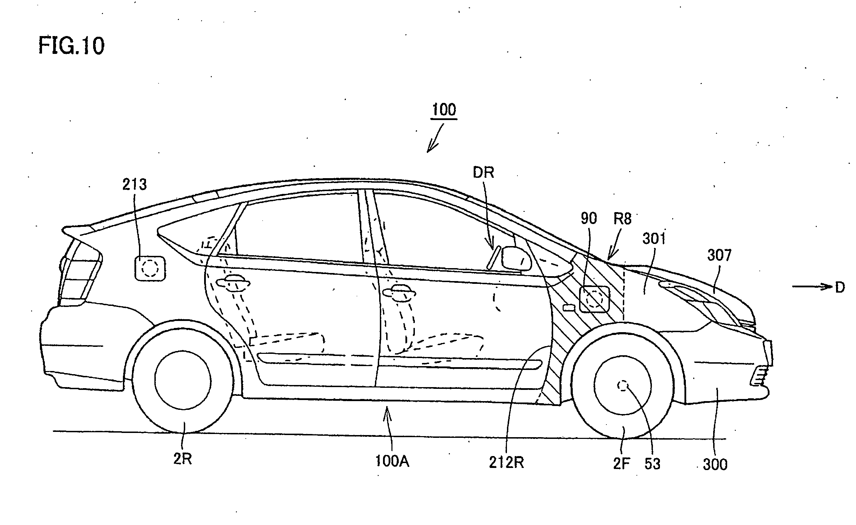

In the example shown in Fig. 10, charging/power-supplying unit 90 is arranged in side surface 100A and particularly in a region R8 that is located rearward, in running direction D, with respect to shaft 53 and is located forward, in running direction D, with respect to the opening edge of opening 212R.

Similarly to the example shown in Fig. 5, this example can suppress secular deterioration of front side-wall 504, even when the charging and external power supplying operations are repeated.

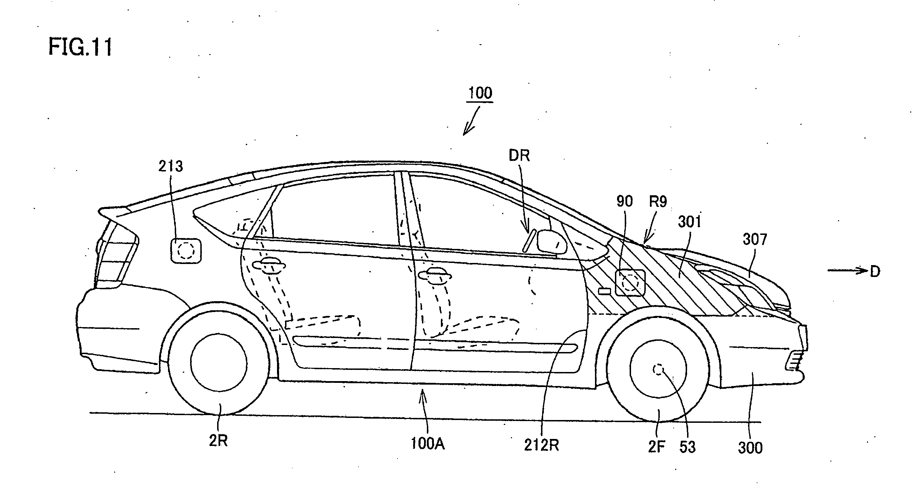

In the example shown in Fig. 11, charging/power-supplying unit 90 is arranged in side surface 100A and particularly in a region R9 that is located forward, in running direction D, with respect to the opening edge of opening 212R and is located above front wheels 2F.

Similarly to the example shown in Fig. 6, this example can facilitate the charging and external power supplying operations and the fueling operation.

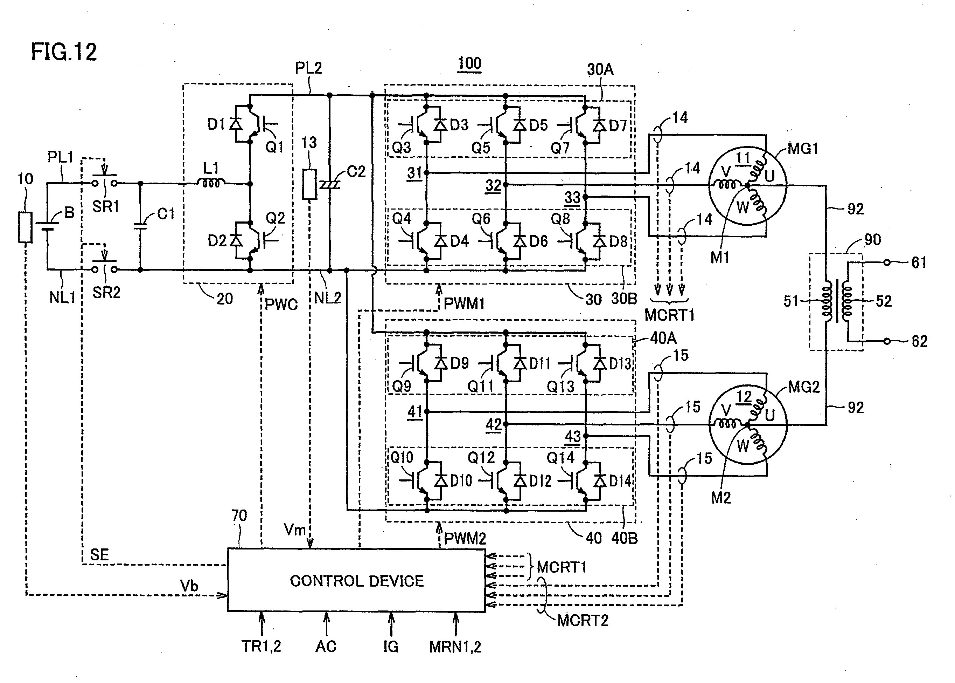

Fig. 12 is a schematic block of hybrid vehicle 100 according to the embodiment of the invention. Referring to Fig. 12, description will be given on a method of charging battery B with an AC current supplied from connector 190.

A positive electrode of battery B is connected to a positive line PL1, and a negative electrode thereof is connected to a negative line NL1. A capacitor C1 is connected between positive and negative lines PL1 and NL1. Booster converter 20 is connected.between positive and negative lines PL1 and NL1 on one side and positive and negative lines PL2 and NL2 on the other side. A capacitor C2 is connected between positive and negative lines PL2 and NL2. Inverter 30 is connected between motor generator MG1 and positive and negative lines PL2 and NL2. Inverter 40 is connected between motor generator MG2 and positive and negative lines PL2 and NL2.

Motor generator MG1 includes a three-phase coil 11 as a stator coil, and motor generator MG2 includes a three-phase coil 12 as a stator coil.

Booster converter 20 includes a reactor L1, NPN transistors Q1 and Q2, and diodes D1 and D2. One end of reactor L1 is connected to positive line PL1, and the other end is connected to a midpoint between NPN transistors Q1 and Q2, i.e., to a point between an emitter of NPN transistor Q1 and a collector of NPN transistor Q2. NPN transistors Q1 and Q2 are connected in series between positive line PL1 and negative lines NL1 and NL2. A collector of NPN transistor Q1 is connected to positive line PL2 of inverters 30 and 40, and an emitter of NPN transistor Q2 is connected to negative lines NL1 and NL2. Diodes D1 and D2 are arranged corresponding to NPN transistors Q1 and Q2, respectively, and each are connected between the collector and emitter of the corresponding transistor Q1 or Q2 for passing a current from the emitter side to the collector side thereof.

Inverter 30 is formed of U-, V- and W-phase arms 31, 32 and 33, which are connected, in parallel with each other, between positive and negative lines PL2 and NL2.

U-phase arm 31 is formed of NPN transistors Q3 and Q4 connected together in series. V-phase arm 32 is formed of NPN transistors Q5 and Q6 connected together in series. W-phase arm 33 is formed ofNPN transistors Q7 and Q8 connected together in series. Diodes D3 - D8 are arranged corresponding to NPN transistors Q3 - Q8, respectively, and each are connected between a collector and an emitter of the corresponding transistor for passing the current form the emitter side to the collector side.

A midpoint of each phase arm of inverter 30 is connected to a phase end of each phase coil of a three-phase coil 11 included in motor generator MG1. Thus, motor generator MG1 is a three-phase permanent magnet motor, and one end of each of its three, i.e., U-, V- and W-phase coils is commonly connected to a neutral point M1. The other ends of the U-, V- and W-phase coils are connected to midpoints between NPN transistors Q3 and Q4, between NPN transistors Q5 and Q6, and between NPN transistors Q7 and Q8, respectively.

Inverter 40 is connected, in parallel with inverter 30, between opposite ends of capacitor C2. Inverter 40 is formed of U-, V- and W-phase arms 41, 42 and 43, which are connected, in parallel with each other, between positive and negative lines PL2 and NL2.

U-phase arm 41 is formed of NPN transistors Q9 and Q10 connected together in series. V-phase arm 42 is formed of NPN transistors Q11 and Q12 connected together in series. W-phase arm 43 is formed of NPN transistors Q13 and Q14 connected together in series. NPN transistors Q9 - Q14 correspond to NPN transistors Q3 - Q8 of inverter 30, respectively. Thus, inverter 40 has the same structure as inverter 30. Diodes D9 - D 14 are arranged corresponding to NPN transistors Q9 - Q 14, respectively, and each are connected between a collector and an emitter of the corresponding transistor for passing the current form the emitter side to the collector side.

A midpoint of each phase_arm of inverter 40 is connected to a phase end of each phase coil of three-phase coil 12 included in motor generator MG2. Thus, motor generator MG2 is a three-phase permanent magnet motor, and one end of each of its three, i.e., U-, V- and W-phase coils is commonly connected to neutral point M2. The other ends of the U-, V- and W-phase coils are connected to midpoints between NPN transistors Q9 and Q 10, between NPN transistors Q11 and Q12, and between NPN transistors Q13 and Q14, respectively.

Battery B is formed of a secondary battery such as a nickel hydrogen battery or a lithium-ion battery. A voltage sensor 10 senses a battery voltage Vb provided from battery B, and provides sensed battery voltage Vb to a control device 70. System relays SR1 and SR2 are turned on/off in response to a signal SE from control device 70. More specifically, system relays SR1 and SR2 are turned on in response to signal SE at an H-level (logical high level) from control device 70, and is turned off in response to signal SE at an L-level (logical low level) from control device 70. Capacitor C1 smoothes the DC voltage supplied from battery B, and supplies the smoothed DC voltage to booster converter 20.

Booster converter 20 boosts the DC voltage supplied from capacitor C1, and supplies it to capacitor C2. More specifically, when booster converter 20 receives a signal PWC from control device 70, it boosts and supplies the DC voltage to capacitor C2 corresponding to a period for which signal PWC keeps NPN transistor Q2 on. In this case, signal PWC keeps NPN transistor Q1 off. According to signal PWC from control device 70, booster converter 20 steps down the DC voltage supplied from inverter 30 and/or 40 via capacitor C2, and charges battery B.

Capacitor C2 smoothes the DC voltage supplied from booster converter 20, and supplies the smoothed DC voltage to inverters 30 and 40. A voltage sensor 13 senses a voltage between the opposite ends of capacitor C2, i.e., an output voltage Vm of booster converter 20 (corresponding to the input voltage provided to inverters 30 and 40 (this is true in the following description)), and provides sensed output voltage Vm to control device 70.

When inverter 30 is supplied with the DC voltage from capacitor C2, inverter 30 converts the DC voltage to the AC voltage based on a signal PWM1 provided from control device 70, and drives motor generator MG1. Thereby, motor generator MG1 is driven to generate a torque indicated by a torque command value TR1. Inverter 30 converts the AC voltage that is generated by motor generator MG1 during regenerative braking of the hybrid vehicle equipped with the power output device to the DC voltage based on signal PWM1 provided from control device 70, and supplies the converted DC voltage to booster converter 20 via capacitor C2. The regenerative braking includes braking that is performed when the driver of the hybrid vehicle operates a brake pedal, and this braking is accompanied by regenerative power generation. Also, the regenerative braking includes deceleration (or stop of acceleration) of the vehicle that is not performed by a foot brake operation, but is performed by releasing an accelerator pedal during running while causing the regenerative power generation.

Inverter 30 drives motor generator MG1 according to signal PWM1 from control device 70 so that an AC voltage VAL for the commercial power can be output from terminals 61 and 62 of charging/power-supplying unit 90.

When inverter 40 is supplied with the DC voltage from capacitor C2, it converts the DC voltage to the AC voltage based on a signal PWM2 from control device 70 for driving motor generator MG2. Thereby, motor generator MG2 is driven to generate a torque indicated by a torque command value TR2. Further, when the hybrid vehicle equipped with the motive power output device performs the regenerative braking, inverter 40 converts the AC voltage generated by motor generator MG2 to the DC voltage based on signal PWM2 from control device 70, and supplies the converted DC voltage to booster converter 20 via capacitor C2.

Further, inverter 40 drives motor generator MG2 according to signal PWM2 from control device 70 so that AC voltage VAC for the commercial power can be output from terminals 61 and 62 of charging/power-supplying unit 90.

A current sensor 14 senses a motor current MCRT1 flowing through motor generator MG1, and provides sensed motor current MCRT1 to control device 70. A current sensor 15 senses a motor current MCRT2 flowing through motor generator MG2, and provides sensed motor current MCRT2 to control device 70.

Charging/power-supplying unit 90 includes a primary coil 51 and a secondary coil 52. Primary coil 51 is connected between neutral point M1 of three-phase coil 11 included in motor generator MG1 and neutral point M2 of three-phase coil 12 included in motor generator MG2. Charging/power-supplying unit 90 converts the AC voltage appearing between neutral points M1 and M2 of motor generators MG1 and MG2 to AC voltage VAC for the commercial power, and outputs it from terminals 61 and 62.

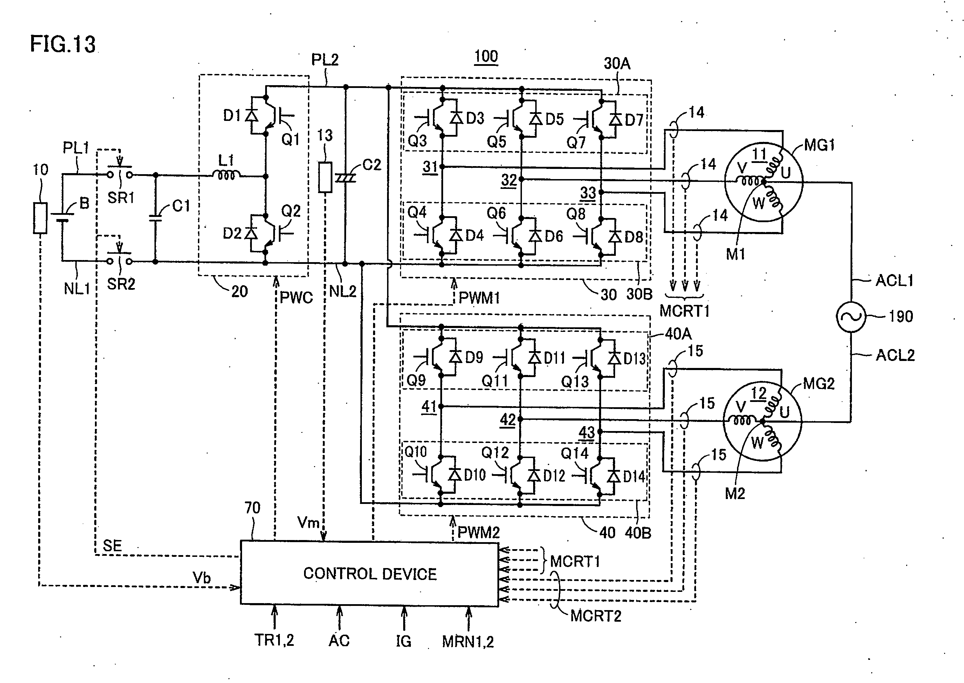

Fig. 13 is a schematic block diagram of hybrid vehicle 100 according to the embodiment of the invention. Referring to Fig. 13, description will be given on a method of supplying the AC current to connector 190 and externally supplying the electric power. Referring to Fig. 13, six transistors in each of inverters 30 and 40 that are formed of the three-phase bridge circuits, respectively, can attain on and off states, of which combination patters are eight in number. In two of these eight switching patterns, an inter-phase voltage is zero, and this voltage state is referred to as a zero-voltage vector. In the zero-voltage vector, it can be regarded that all the three transistors of the upper arm are in the same switching state (all on or all off), and also it can be regarded that all the three transistors of the lower arm are in the same switching state. Therefore, Fig. 13 shows the three transistors of the upper arm of inverter 30 as an upper arm 30A, and also shows the three transistors of the lower arm of inverter 30 as a lower arm 30B. Likewise, Fig. 13 shows the three transistors of the upper arm of inverter 40 as an upper arm 40A, and also shows the three transistors of the lower arm of inverter 40 as a lower arm 40B.

As shown in Fig. 13, this zero-phase equivalent circuit can be regarded as a single-phase PWM converter of which input is the single-phase AC power provided to neutral points M1 and M2 via power input lines ACL1 (92) and ACL2 (92) of connector 190. Accordingly, the zero-voltage vector is changed in each of inverters 30 and 40 to perform the switching control so that inverters 30 and 40 may operate as arms of the single-phase PWM converter. Thereby, the AC power provided from power input lines ACL1 and ACL2 can be converted to the DC power, which is provided to positive line PL2. The DC power thus converted is supplied to booster converter 20 via capacitor C2 for charging battery B.

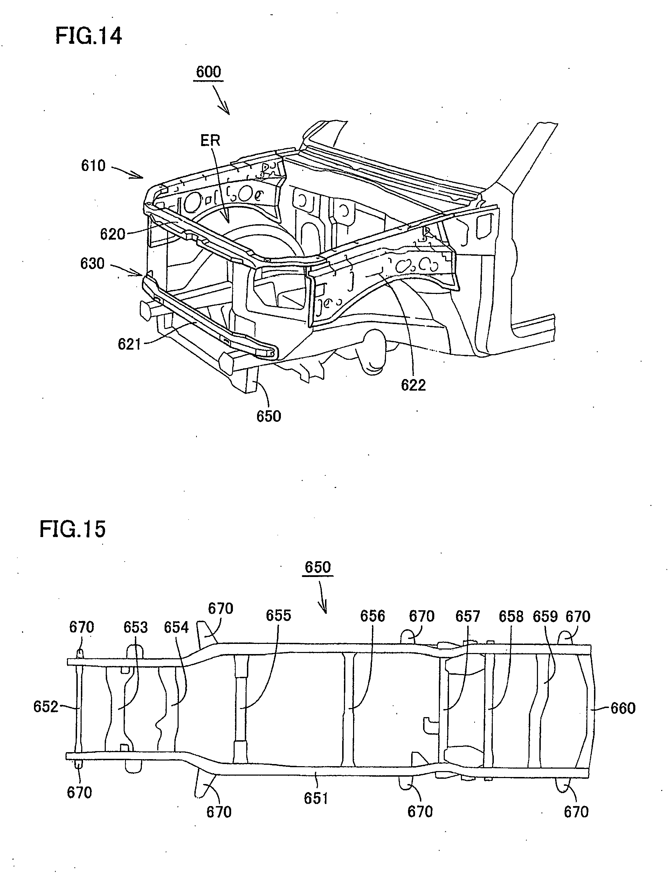

Although the embodiment has been described in connection with the case where it is applied to the hybrid vehicle having the unitized body, this is not restrictive. Fig. 14 is a perspective view showing a part of a frame-equipped body 600, and Fig. 15 is a plan view showing a frame 650 of frame-equipped body 600 shown in Fig. 14.

In the example shown in Fig. 14, frame-equipped body 600 includes frame 650, and a box-shaped body 610 fixed to an upper surface of frame 650.

Body 610 has a front portion 630 defining engine compartment ER. Front portion 630 includes an upper support portion 620 arranged on a front surface, a lower support portion 621, and front fender portions 622 defining side surfaces of engine compartment ER.

Upper edge portions of upper support portion 620 and front fender portions 622 define a part of the opening of engine compartment ER, and lower support portion 621 is arranged under upper support portion 620.

The central portion of upper support portion 620, the upper edge portions of front fender portions 622 and the central portion of lower support portion 621 have reduced thicknesses so that a flexible structure of a reduced weight is implemented. Thereby, this structure can suppress increase in vibration of a hood panel (not shown).

Charging/power-supplying unit 90 is arranged in front fender portion 622 having the flexible structure. Thereby, the provision of charging/power-supplying unit 90 can suppress the increase in rigidity of front fender portion 622 and therefore the increase in vibration of the hood panel to a higher extent, as compared with the case where fueling unit 213 shown in Fig. 1 is arranged therein.

As shown in Fig. 13, frame 650 includes a pair of side frames 651 extending in running direction D of hybrid vehicle 100, a plurality of side support portions 652 - 660 arranged between these side frames 651, and a plurality of fixing portions 670 fixing body 610 and frame 650 together. Since frame-equipped body 600 includes frame 650 described above, it can ensure high rigidity. For example, for a towing operation, frame 650 may be provided with a towing portion so that deformation or the like of frame-equipped body 600 can be suppressed.

The embodiment has been described based on the so-called "series parallel hybrid" that is a certain type of hybrid. However, this is not restrictive. More specifically, the embodiment can be applied to a series hybrid, i.e., a hybrid type in which the vehicle includes an engine that is an internal combustion engine requiring fueling, and a running motor (i.e., motor for running) driving wheels by an electric power generated by the engine and/or by an electric power stored in a battery. Further, the embodiment can be applied to a parallel hybrid in which both the engine and the motor can provide motive powers to a drive shaft.

In the hybrid vehicle according to the embodiment, methods of using neutrals M1 and M2 of motor generators MG1 and MG2 are employed as the method of charging battery B and the method of externally supplying the electric power. However, this is not restrictive. For example, a dedicated charging/power-supplying device that has functions as an inverter and a DC/DC converter may be employed for performing the charging and the electric power supplying. This dedicated charging/power-supplying device is connected, e.g., between capacitor C1 and system relays SR1 and SR2 in Fig. 12.

The embodiment has been described in connection with an example in which the invention is applied to the hybrid vehicle, this is not restrictive.

For example, the invention can be applied to a fuel cell vehicle.

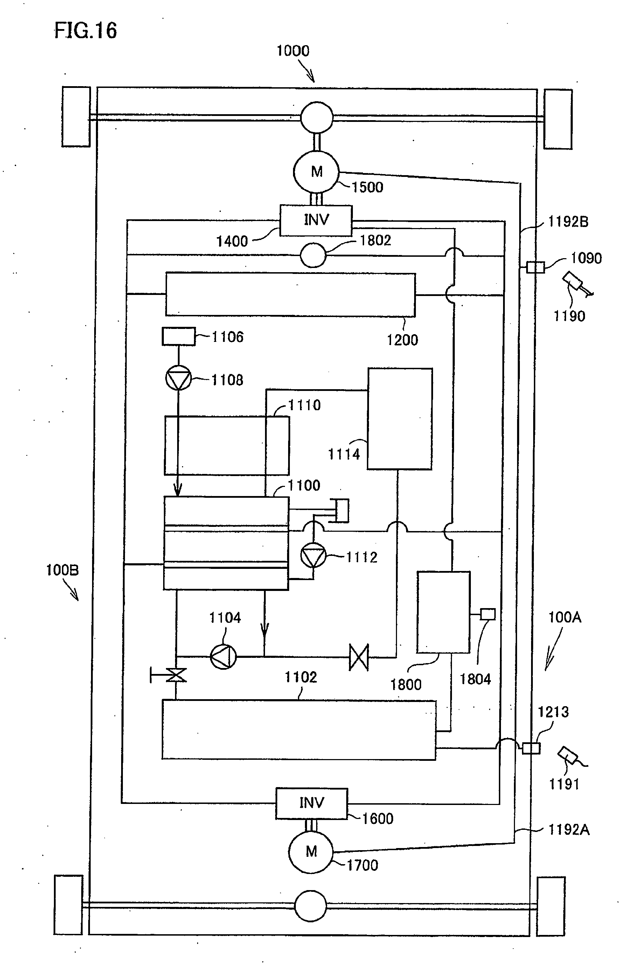

Fig. 16 is a schematic view schematically showing a structure in which the invention is applied to a fuel cell vehicle 1000. As shown in Fig. 16, fuel cell vehicle 1000 includes a fuel cell 1100, a power storage unit 1200 such as a capacitor, an inverter 1400 for running, an inverter 1600 for accessories, an accessory motor 1700 and an ECU (Electronic Control Unit) 1800. A control device of an electric system according to the embodiment is implemented, e.g., by programs executed by ECU 1800.

Fuel cell 1100 generates the electric power by a chemical reaction of hydrogen and oxygen in the air. The electric power generated by fuel cell 1100 is stored in power storage unit 1200 or is consumed by devices mounted on fuel cell vehicle 1000. Since fuel cell 1100 can employ known general technologies, further description thereof is not repeated.

Power storage unit 1200 is formed of, e.g., a plurality of cells (electric double-layer capacitors) connected in series, and may be a secondary battery or the like. Inverter 1400 for running converts the DC power supplied from fuel cell 1100 and power storage unit 1200 to the AC power, and drives a running motor 1500. During regenerative braking, it converts the AC power generated by running motor 1500 to the DC power, and supplies it to power storage unit 1200.

Running motor 1500 is a three-phase AC dynamo-electric machine. U-, V- and W-phase coils are wound around a stator of running motor 1500. Ends on one side of U-, V- and W-phase coils are connected together at a neutral point. The other ends of the U-, V- and W-phase coils are connected to running inverter 1400.

An interconnection 1192B of a connection unit (second connection unit) 1090 is connected to the neutral point of running motor 1500. To this connection unit 1090, it is possible to connect, e.g., a connector 1190 connected to the AC power supply such as a general home power supply connector. Therefore, the AC power can be supplied to running motor 1500.

Accessory motor 1700 is likewise a three-phase AC dynamo-electric machine. U-, V- and W-phase coils are wound around a stator of accessory motor 1700. Ends on one side of U-, V- and W-phase coils thereof are connected together at a neutral point. The other ends of the U-, V- and W-phase coils are connected to accessory inverter 1600.

An interconnection 1192A of connection unit 1090 is connected to the neutral point of accessory motor 1700 so that the AC power can be supplied to a neutral point of accessory motor 1700 from connection unit 1090 from connector 1190 via connection unit 1090.

Connection unit 1090 described above is arranged on one side surface 100A of fuel cell vehicle 1000.

As described above, the AC power supplied to running motor 1500 and accessory motor 1700 is converted to the DC power by running inverter 1400 and accessory inverter 1600, and is supplied to power storage unit 1200 so that power storage unit 1200 is charged.

The motive power supplied from running motor 1500 drives fuel cell vehicle 1000 to run. In the regenerative breaking operation, the wheels (not shown) drive running motor 1500 to operate as an electric power generator. Thereby, running motor 1500 operates as a regenerative brake converting the braking energy to the electric energy.

Accessory inverter 1600 converts the DC power supplied from fuel cell 1100 and power storage unit 1200 to the AC power, and drives accessory motor 1700. Accessory motor 1700 drives the accessories that operate for operating fuel cell 1100. The accessories that are driven for operating fuel cell 1100 will be described later.

A voltmeter 1802 and a start switch 1804 are connected to ECU 1800. The voltmeter senses a system voltage (i.e., a voltage of power storage unit 1200), and transmits a signal indicating a result of the sensing to ECU 1800. A driver of fuel cell vehicle 1000 can operate start switch 1804. When start switch 1804 is turned on, ECU 1800 starts the system of the vehicle. When start switch 1804 is turned off, ECU 1800 stops the system of the vehicle.

ECU 1800 controls the devices and the like mounted on fuel cell vehicle 1000 to set the vehicle in a desired drive state based on a driving state of the vehicle, an accelerator position sensed by an accelerator position sensor (not shown), a press-down degree of an brake pedal, a shift position, a voltage of power storage unit 1200 and an operated state of start switch 1804 as well as maps and programs stored in a ROM (Read Only Memory).

Fuel cell vehicle 1000 includes a hydrogen tank 1102, a hydrogen pump 1104, an air filter 1106, an air pump 1108, a humidifier 1110, a water pump 1112 and a diluter 1114.

Hydrogen tank 1102 stores hydrogen. A hydrogen-storing alloy may be used instead of hydrogen tank 1102. Hydrogen tank 1102 is connected to a connection unit 1213 that supplies, to hydrogen tank 1102, the hydrogen supplied from a hydrogen supply connection unit 1191.

Since connection units 1213 and 1090 are both arranged on side surface 100A, confusion about the side surfaces where connection units 1213 and 1090 are arranged can be suppressed when the driver performs the charging operation or the hydrogen-supplying operation.

Particularly, since connection units 1213 and 1090 are arranged on the same side surface 100A, it is possible to suppress an error about the entry direction when the driver moves the vehicle into the charging/hydrogen-supplying station.

Further, by spacing connection units 1213 and 1090 from each other in the longitudinal direction of the vehicle as shown in Fig. 11, it is possible to suppress hydrogen brittle fracture that may occur in and around connection unit 1090 due to the hydrogen supplied from hydrogen supply connection unit 1191.

For example, the opening that continues to the occupant accommodating compartment and allows entry of an occupant is located between connection units 1213 and 1090. This structure can suppress the hydrogen brittle fracture in and around connection unit 1090, and can also suppress the confusion about connection units 1213 and 1090 by an operator.

The positional relationship between charging/power-supplying unit 90 and connection potion 1213 in the first embodiment may be applied to connection units 1213 and 1090.

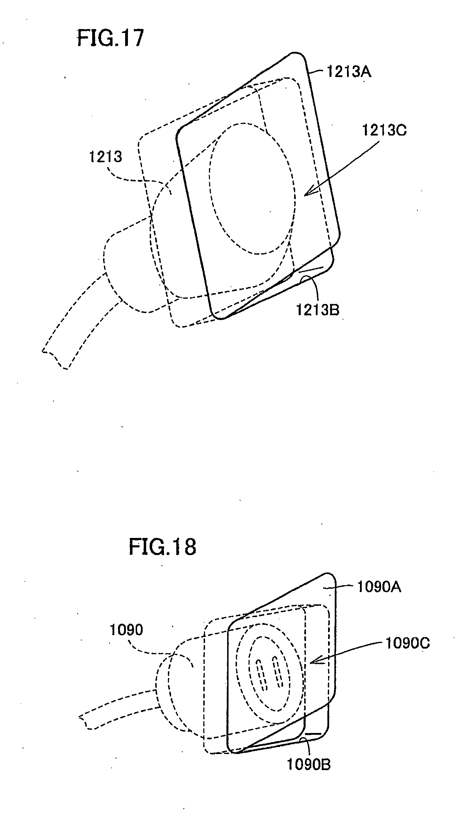

Fig. 17 is a perspective view showing structures of and around connection unit 1213. As shown in Fig. 17, connection unit 1213 is accommodated in an accommodation chamber 1213C formed in side surface 100A of the vehicle. Accommodation chamber 1213C has an outward opening 1213B, which can be closed by an openable lid 1213A pivotably arranged on side surface 100A. Connection unit 1213 can accept the nozzle unit of hydrogen supply connection unit 1191. For supplying the hydrogen to the vehicle, an operator opens lid 1213A, fits hydrogen supply connection unit 1191 into connection unit 1213 and starts the supplying of hydrogen. When the supply of hydrogen is completed, the opening of connection unit 1213 is closed by an openable inner lid (not shown), and opening 1213B is closed by lid 1213A.

Since connection unit 1213 is accommodated in closable accommodation chamber 1213C as described above, external leakage of the hydrogen can be suppressed, and it is possible to suppress corrosion of the vehicle body that may occur in a portion around accommodation chamber 1213C due to the hydrogen.

Fig. 18 is a perspective view showing structures of and around connection unit 1090. As shown in Fig. 18, connection unit 1090 is accommodated in an accommodation chamber 1090C that is independent of accommodation chamber 1213C.

Therefore, contact of connection unit 1090 with the hydrogen can be suppressed, and corrosion of connection unit 1090 can be suppressed.

Particularly, when an opening 1212 is present between connection units 1090 and 1213, an appropriate distance is kept between connection units 1090 and 1213, and the contact of hydrogen with connection unit 1090 can be suppressed.

For generating the electric power by fuel cell 1100 in this embodiment, hydrogen pump 1104 feeds the hydrogen stored in hydrogen tank 1102 to an anode side of fuel cell 1100. For stopping the power generation of fuel cell 1100, hydrogen pump 1104 is driven to perform a stop processing of discharging residual hydrogen from the anode side of fuel cell 1100. Accessory motor 1700 drives hydrogen pump 1104.

Air pump 1108 feeds the air to the cathode side of fuel cell 1100. In the power generation of fuel cell 1100, air pump 1108 is drive to take in the air through air filter 1106, and the air is humidified by humidifier 1110 and then is fed toward the cathode of fuel cell 1100. When the power generation of fuel cell 1100 is to be stopped, air pump 1108 is driven. Thereby, the air taken through air filter 1106 is fed toward the cathode of fuel cell 1100 without being humidified, and the stop processing of drying fuel cell 1100 is performed. Air pump 1108 is driven by accessory motor 1700.

Water pump 1112 discharges cooling water for cooling fuel cell 1100. The cooling water discharged by water pump 1112 circulates in fuel cell 1100. Water pump 1112 is driven by accessory motor 1700.

The hydrogen passed through the anode side of fuel cell 1100 and the air passed through the cathode side are led to diluter 1114. Diluter 1114 dilutes the hydrogen and the diluted hydrogen is externally discharged from the vehicle.

Although only one accessory motor 1700 has been described, accessory motors 1700 are provided corresponding to hydrogen pump 1104, air pump 1108 and water pump 1112, respectively. In this embodiment, accessory motor 1700 is driven by converting the electric power supplied from power storage unit 1200 from the DC power to the AC power. However, a configuration that drives accessory motor 1700 by the DC power without using accessory inverter 1600 may be employed.

In the second embodiment, the hydrogen used in fuel cell 1100 is supplied through connection unit 1213. However, this is not restrictive.

For example, in a system employing a reformer that takes out the hydrogen from the fuel such as ethanol containing hydrogen atoms, connection unit 1213 is supplied with the methanol. Connection unit 1213 is connected to a methanol tank (not shown) employed independently of hydrogen tank 1102, and the methanol tank stores the methanol.

The hydrogen is produced by supplying the methanol stored in the methanol tank and the water to the reformer, and is stored in hydrogen tank 1102. Alternatively, a configuration that supplies the produced hydrogen directly to the fuel cell may be employed.

In the direct methanol system that directly supplies the methanol to the fuel cell, the connection unit is likewise supplied with the methanol.

In this direct methanol system, the methanol is supplied together with the water to the anode of fuel cell 1100, and is decomposed to produce hydrogen ions, electrons and carbon dioxide, using catalyst such as platinum. The hydrogen ions move through an electrolytic membrane toward the cathode, and reacts with the oxygen in the air to change into water. The electrons are supplied as an electric power through terminals.

In fuel cell vehicle 1000 of this direct methanol system, a methanol tank connected to connection unit 1213 stores the methanol supplied from connection unit 1213. The methanol stored in the methanol tank is supplied to fuel cell 1100.

Further, in fuel cell vehicle 1000 equipped with an ethanol reforming device, connection unit 1213 is supplied with the ethanol. In this fuel cell vehicle 1000 equipped with the ethanol reforming device, the ethanol reforming device is supplied with the ethanol and the water to produce the hydrogen and the carbon dioxide. The hydrogen thus produce is supplied to the fuel cell to obtain the electric power.

Fuel cell vehicle 1000 equipped with the ethanol reforming device is supplied with the ethanol through connection unit 1213, and stores it in the ethanol tank. The ethanol stored in the ethanol tank is supplied to the ethanol reforming device.

As described above, the invention can be applied to various types of fuel cell vehicles 1000. Although the third embodiment has been described in connection with the fuel cell vehicle in which power storage unit 1200 is chargeable and the fuel other than the electric power can be supplied, this is not restrictive.

For example, the invention may be applied to the fuel cell vehicle in which the DC power stored in power storage unit 1200 can be converted to the AC power, and can be supplied to an external load, and fuel other the electric power can be supplied to the fuel cell to generate a motive power.

Although the present invention has been described and illustrated in detail, it is clearly understood that the same is by way of illustration and example only and is not to be taken by way of limitation, the scope of the present invention being interpreted by the terms of the appended claims.

### Industrial Applicability

The invention relates to the hybrid vehicle, and particularly is suitable for the hybrid vehicle that allows the electric power supplying and/or the external electric power supplying.

## Claims

1. A vehicle comprising:
a first drive unit (4) driven by a first energy source;
a first storage unit (201) for storing said first energy source;
a first energy accepting unit (213) removably connected to a first energy supply unit (191) and supplied with said first energy source;
a first connection unit (214) connected to said first energy accepting unit (213) and leading said first energy source supplied to said first energy accepting unit (213) to said first storage unit (201);
a second drive unit (MG1, MG2) driven by a second energy source different from said first energy source;
a second storage unit (B) storing said second energy source;
a second energy accepting unit (90) removably connected to a second energy supply unit and supplied with said second energy source; and
a second connection unit (92) connected to said second energy accepting unit (90) and leading said second energy source supplied to said second energy accepting unit (90) to said second storage unit (B), wherein
said vehicle is provided with an occupant accommodating compartment (CR) for accommodating an occupant, and an entry opening (212L, 212R) connecting said occupant accommodating compartment to an outside of said vehicle, and
said first and second energy accepting units (213, 90) are arranged on the same side surface of said vehicle, and said entry opening (212L, 212R) is located between said first and second energy accepting units (213, 90).

2. The vehicle according to claim 1, further comprising:
a first accommodation chamber accommodating said first energy accepting unit (213); and
a second accommodation chamber accommodating said second energy accepting unit (90) and being independent of said first accommodation chamber.

3. The vehicle according to claim 2, wherein
said first energy source is hydrogen or fuel containing hydrogen atoms, said first drive unit is a fuel cell (1100) capable of generating an electric power, said second energy source is an electric power, and said second drive unit is a dynamo-electric machine (1500, 1700) driven by said electric power.

4. The vehicle according to claim 2, wherein
said first energy source is fuel, said first drive unit is an internal combustion engine driven by said fuel, said second energy source is an electric power, and said second drive unit is a motor generator (MG1, MG2) driven by said electric power.

5. A vehicle, comprising
a receiver (1213) provided outside the vehicle, into and from which a nozzle for supplying fuel containing hydrogen atoms or hydrogen can be inserted and removed;
a tank (1102) capable of storing the fuel containing hydrogen atoms of the hydrogen supplied through said nozzle;
a fuel cell (1100) capable of generating electric power from the hydrogen;
a power storage unit (1200) capable of storing the electric power;
a motor (1500) for generating drive power;
a charging unit (1090) to which a connector allowing supply of electric power can be connected, capable of charging said power storage unit with electric power supplied through said connector;
a vehicle main-unit including one side surface and the other side surface located on a side opposite to said one side surface, and
an entry opening (212L, 212R) formed in said vehicle main-unit,
said receiver (1213) and said charging unit (1090) being provided in said one side surface and said entry opening being arranged between said receiver and said charging unit.

6. The vehicle according to claim 1, wherein said first energy accepting unit (213) is provided toward rear relative to said entry opening (212L, 212R), and said second energy accepting unit (90) is provided toward front relative to set entry opening (212L, 212R).

## Patentansprüche

1. Fahrzeug mit
einer ersten Antriebseinheit (4), die durch einen ersten Energieträger angetrieben wird;
einer ersten Speichereinheit (201) zum Speichern des ersten Energieträgers;
einer ersten Energieaufnahmeeinheit (213), die lösbar mit einer ersten Energieliefereinheit (191) verbunden ist und mit dem ersten Energieträger beliefert wird;
einer ersten Verbindungseinheit (214), die mit der ersten Energieaufnahmeeinheit (213) verbunden ist, und den ersten Energieträger, der zu der ersten Energieaufnahmeeinheit (213) geliefert wird, zu der ersten Speichereinheit (201) führt;
einer zweiten Antriebseinheit (MG1, MG2), die durch einen zweiten Energieträger angetrieben wird, der von dem ersten Energieträger verschieden ist;
einer zweiten Speichereinheit (B) zum Speichern des zweiten Energieträgers;
einer zweiten Energieaufnahmeeinheit (90), die lösbar mit einer zweiten Energieliefereinheit verbunden ist und mit dem zweiten Energieträger beliefert wird; sowie
einer zweiten Verbindungseinheit (92), die mit der zweiten Energieaufnahmeeinheit (90) verbunden ist und den zweiten Energieträger, der zu der zweiten Energieaufnahmeeinheit (90) geliefert wird, zu der zweiten Speichereinheit (B) führt, wobei
das Fahrzeug mit einem Fahrzeuginsassen aufnehmenden Fahrgastraum (CR) zum Aufnehmen eines Fahrzeuginsassen, sowie einer Einsteigeöffnung (212L, 212R) ausgestattet ist, die den Fahrzeuginsassen aufnehmenden Fahrgastraum mit einem Fahrzeugäußeren verbindet, und wobei
die erste und zweite Energieaufnahmeeinheit (213, 90) auf derselben Seitenfläche des Fahrzeugs angeordnet sind und die Einsteigeöffnung (212L, 212R) zwischen der ersten und zweiten Energieaufnahmeeinheit (213, 90) liegt.

2. Fahrzeug nach Anspruch 1, ferner mit
einer ersten Aufnahmekammer, die die erste Energieaufnahmeeinheit (213) aufnimmt; sowie
einer zweiten Aufnahmekammer, die die zweite Energieaufnahmeeinheit (90) aufnimmt und von der ersten Aufnahmekammer unabhängig ist.

3. Fahrzeug nach Anspruch 2, wobei
der erste Energieträger Wasserstoff oder ein Brennstoff ist, der Wasserstoffatome enthält, die erste Antriebseinheit eine Brennstoffzelle (1100) ist, die imstande ist, elektrische Energie zu erzeugen, der zweite Energieträger elektrische Energie ist, und die zweite Antriebseinheit eine dynamoelektrische Maschine (1500, 1700) ist, die durch die elektrische Energie angetrieben ist.

4. Fahrzeug nach Anspruch 2, wobei
der erste Energieträger Treibstoff ist, die erste Antriebseinheit eine Brennkraftmaschine ist, die durch den Treibstoff angetrieben ist, der zweite Energieträger elektrische Energie ist und die zweite Antriebseinheit ein Motorgenerator (MG1, MG2) ist, der durch die elektrische Energie angetrieben ist.

5. Fahrzeug mit
einer Aufnahme (1213), die außerhalb des Fahrzeugs vorgesehen ist, in die und von der ein Stutzen zum Liefern von Brennstoff, der Wasserstoffatome enthält, oder Wasserstoff eingesetzt und entfernt werden kann;
einem Behälter (1102), der imstande ist, den durch den Stutzen gelieferten Brennstoff, der Wasserstoffatome enthält, oder den Wasserstoff zu speichern;
einer Brennstoffzelle (1100), die imstande ist, elektrische Energie aus dem Wasserstoff zu erzeugen;
einer Energiespeichereinheit (1200), die imstande ist, die elektrische Energie zu speichern;
einem Motor (1500) zum Erzeugen von Antriebsleistung;
einer Ladeeinheit (1090), mit der ein Anschluss, der das Liefern elektrischer Energie ermöglicht, verbunden werden kann, die imstande ist, die Energiespeichereinheit mit durch den Anschluss gelieferter elektrischer Energie zu laden;
einer Fahrzeughaupteinheit mit einer Seitenfläche und der anderen Seitenfläche, die auf einer zu der einen Seitenfläche entgegen gesetzten Seite liegt; und
einer Einsteigeöffnung (212L, 212R), die in der Fahrzeughaupteinheit ausgebildet ist,
wobei die Aufnahme (1213) und die Ladeeinheit (1090) in der einen Seitenfläche vorgesehen sind und die Einsteigeöffnung zwischen der Aufnahme und der Ladeeinheit angeordnet ist.

6. Fahrzeug nach Anspruch 1, wobei die erste Energieaufnahmeeinheit (213) heckseitig in Bezug auf die Einsteigeöffnung (212L, 212R) vorgesehen ist und die zweite Energieaufnahmeeinheit (90) frontseitig in Bezug auf die Einsteigeöffnung (212L, 212R) vorgesehen ist.

## Revendications

1. Véhicule comprenant :
une première unité d'entraînement (4) entraînée par une première source d'énergie ;
une première unité de stockage (201) pour stocker ladite première source d'énergie ;
une première unité d'acceptation d'énergie (213) reliée de manière amovible à une première unité d'alimentation en énergie (191) et alimentée à partir de ladite première source d'énergie ;
une première unité de connexion (214) reliée à ladite première unité d'acceptation d'énergie (213) et conduisant ladite première source d'énergie fournie à ladite première unité d'acceptation d'énergie (213) vers ladite première unité de stockage (201) ;
une deuxième unité d'entraînement (MG1, MG2) entraînée par une deuxième source d'énergie différente de ladite première source d'énergie ;
une deuxième unité de stockage (B) stockant ladite deuxième source d'énergie ;
une deuxième unité d'acceptation d'énergie (90) reliée de manière amovible à une deuxième unité d'alimentation en énergie et alimentée à partir de ladite deuxième source d'énergie ; et
une deuxième unité de connexion (92) reliée à ladite deuxième unité d'acceptation d'énergie (90) et conduisant ladite deuxième source d'énergie fournie à ladite deuxième unité d'acceptation d'énergie (90) vers ladite deuxième unité de stockage (B), où
ledit véhicule est pourvu d'un compartiment passager (CR) pour recevoir un passager, et une ouverture d'entrée (212L, 212R) reliant ledit compartiment passager à l'extérieur dudit véhicule, et
lesdites première et deuxième unités d'acceptation d'énergie (213, 90) sont agencées sur la même surface latérale dudit véhicule, et ladite ouverture d'entrée (212L, 212R) est située entre lesdites première et deuxième unités d'acceptation d'énergie (213, 90).

2. Véhicule selon la revendication 1, comprenant en outre :
une première chambre de réception recevant ladite première unité d'acceptation d'énergie (213) ; et
une deuxième chambre de réception recevant ladite deuxième unité d'acceptation d'énergie (90) et étant indépendante de ladite première chambre de réception.

3. Véhicule selon la revendication 2, dans lequel
ladite première source d'énergie est de l'hydrogène ou du carburant contenant des atomes d'hydrogène, ladite première unité d'entraînement est une pile à combustible (1100) capable de générer une puissance électrique, ladite deuxième source d'énergie est une puissance électrique, et ladite deuxième unité d'entraînement est une machine dynamo-électrique (1500, 1700) entraînée par ladite puissance électrique.

4. Véhicule selon la revendication 2, dans lequel
ladite première source d'énergie est du carburant, ladite première unité d'entraînement est un moteur à combustion interne entraîné par ledit carburant, ladite deuxième source d'énergie est une puissance électrique, et ladite deuxième unité d'entraînement est un moteur-générateur (MG1, MG2) entraîné par ladite puissance électrique.

5. Véhicule, comprenant
un récepteur (1213) prévu à l'extérieur du véhicule, dans lequel une buse permettant de fournir du carburant contenant des atomes d'hydrogène ou de l'hydrogène peut être introduite et à partir duquel elle peut être retirée ;
un réservoir (1102) capable de stocker le carburant contenant des atomes d'hydrogène de l'hydrogène fourni à travers ladite buse ;
une pile à combustible (1100) capable de générer de la puissance électrique à partir de l'hydrogène ;
une unité de stockage d'énergie (1200) capable de stocker de la puissance électrique ;
un moteur (1500) pour générer une puissance d'entraînement ;
une unité de charge (1090) à laquelle un connecteur permettant l'alimentation en puissance électrique peut être relié, capable de charger ladite unité de stockage de puissance avec la puissance électrique fournie à travers ledit connecteur ;
une unité principale de véhicule comportant une surface latérale et l'autre surface latérale située sur un côté opposé à ladite surface latérale ; et
une ouverture d'entrée (212L, 212R) formée dans ladite unité principale de véhicule,
ledit récepteur (1213) et ladite unité de charge (1090) étant prévus dans ladite surface latérale et ladite ouverture d'entrée étant agencée entre ledit récepteur et ladite unité de charge.

6. Véhicule selon la revendication 1, dans lequel ladite première unité d'acceptation d'énergie (213) est prévue vers l'arrière par rapport à ladite ouverture d'entrée (212L, 212R), et ladite deuxième unité d'acceptation d'énergie (90) est prévue vers l'avant par rapport à ladite ouverture d'entrée (212L, 212R).
